# EUROPÄISCHE PATENTSCHRIFT

(11) **EP 3 588 080 B1**
(45) Veröffentlichungstag und Bekanntmachung des Hinweises auf die Patenterteilung: **19.06.2024**
(21) Anmeldenummer: 19174936.5
(22) Anmeldetag: 16.05.2019
(51) Int. Cl.: G01N 30/94, G01N 30/90, G01N 30/88

(54) **VERFAHREN UND VORRICHTUNG ZUR AUTOMATISCHEN CHROMATOGRAPHIE VON DÜNNSCHICHTPLATTEN**
METHOD AND DEVICE FOR AUTOMATIC CHROMATOGRAPHY OF THIN-FILM PLATES
PROCÉDÉ ET DISPOSITIF DE CHROMATOGRAPHIE AUTOMATIQUE DE PLAQUES EN COUCHES MINCES

(30) Priorität: 21.06.2018 CH 7882018
(43) Veröffentlichungstag der Anmeldung: 01.01.2020
(73) Patentinhaber: Camag Chemie-Erzeugnisse und Adsorptionstechnik AG, 4132 Muttenz (CH)
(72) Erfinder: Gutmann, Bastian, 8400 Winterthur (CH); Richerdt, Nicolas, 68730 Michelbach le bas (FR); Schranz, Urs Lukas, 4144 Arlesheim (CH); Sturgess, Mark Howell, 4054 Basel (CH)
(74) Vertreter: Kieffer, Valentin

(56) Entgegenhaltungen:
- CH-A5- 692 008
- DE-A1- 2 814 993
- DE-A1- 4 031 909
- SE-B- 454 729
- Anonymous: "ADC 2 Automatic Developing Chamber - Chromatogram development with standardized conditions", , September 2011 (2011-09), Seiten 1-6, XP055526314, Gefunden im Internet: URL:www.go-gddq.com/down/2011-09/110923100 64948.pdf [gefunden am 2018-11-23]
- Anonymous: "Introducing the new generation HPTLC software", CBS 113, September 2014 (2014-09), Seiten 1-16, XP055526308, CAMAG BIBLIOGRAPHY SERVICE Gefunden im Internet: URL:https://www.camag.com/en/tlc_hptlc/cus tomer_magazine_cbs/camag_bibliography_serv ice_cbs.cfm?id=1D61JGU7-CBS_113 [gefunden am 2018-11-23]

## Beschreibung

Die vorliegende Erfindung betrifft ein Verfahren zur automatischen Chromatographie von Dünnschichtplatten im Bereich der Dünnschichtchromatographie und eine Vorrichtung zur Durchführung dieses Verfahrens.

Die Dünnschichtchromatographie ist ein Trennverfahren zur Untersuchung der Zusammensetzung von flüssigen Proben, welches aus zwei wesentlichen Schritten besteht:
1) Die Auftragung der Probe auf die Trennschicht einer Dünnschichtplatte, meistens eine Kieselgelschicht (die sog. stationäre Phase);
2) Die chromatographische Entwicklung, wobei meistens das untere Ende der Dünnschichtplatte in Kontakt mit einem Fliessmittel gebracht wird, welches in der Trennschicht durch Kapillarkräfte mit einer bestimmten Geschwindigkeit aufwärts migriert (die sog. mobile Phase).

Während der chromatographischen Entwicklung werden die in der Probe enthaltenen Moleküle vom Fliessmittel durch die Trennschicht mitgenommen. Aufgrund ihrer unterschiedlichen chemischen Eigenschaften haben unterschiedliche Moleküle der Probe unterschiedliche Migrationsgeschwindigkeiten in der Trennschicht. Aus diesem Grund befinden sich die unterschiedlichen Moleküle nach einer bestimmten Zeit in unterschiedlichen Abständen relativ zur Auftrageposition auf der Dünnschichtplatte, sind somit getrennt und können voneinander unterschieden werden. Die Dünnschichtchromatographie ist also sehr leicht experimentell umzusetzen und benötigt grundsätzlich nur wenig aufwändige Apparate und Infrastruktur.

In den meisten Labors wird die Dünnschichtchromatographie dementsprechend mit einfachsten Mitteln durchgeführt, indem die Dünnschichtplatte mit der aufgetragenen Probe in einen Behälter gestellt wird, in welchem sich ein Fliessmittel befindet. Die chromatographische Entwicklungsphase beginnt, sobald das untere Ende der Dünnschichtplatte in das Fliessmittel eintaucht. Nach einer bestimmten Zeit wird zur Beendigung der chromatographischen Entwicklungsphase die Dünnschichtplatte aus dem Behälter entnommen und getrocknet.

Ein wesentlicher Nachteil dieser einfachen Methode ist die schlechte Reproduzierbarkeit der erzeugten Chromatogramme, wodurch platten- und standortübergreifende Vergleiche schwierig sind. Grund dafür ist die mangelnde Kontrolle der die chromatographische Entwicklung beeinflussenden Parameter: neben den physikalischen und chemischen Eigenschaften der Trennschicht in Bezug auf Aktivität und Selektivität und der Zusammensetzung des Lösungsmittels gibt es auch Wechselwirkungen zwischen der inneren Atmosphäre der Entwicklungskammer (Kammeratmosphäre) und der Dünnschichtplatte.

Der oben aufgeführte Mangel ist bekannt, und im Stand der Technik sind mehrere Lösungen zur Kontrolle der Kammeratmosphäre vor bzw. während der chromatographischen Entwicklung zu finden. In der US 3,342,333 A wird erklärt, dass während der gesamten chromatographischen Entwicklungsphase identische atmosphärische Bedingungen gehalten werden müssen. Dafür wurde eine Entwicklungskammer zur kontrollierten Befeuchtung und Trocknung von Dünnschichtplatten vor der chromatographischen Entwicklung unter einer kontrollierten Atmosphäre bereitgestellt. Es genügt aber nicht, die Innenatmosphäre vor dem Start der chromatographischen Entwicklung sorgfältig einzustellen, da diese sich auch im Laufe der chromatographischen Entwicklung stets verändert, insbesondere an der Grenzfläche mit der Dünnschichtplatte aufgrund der Verdampfung des Fliessmittels. Aus diesem Grund ist bei der chromatographischen Entwicklungskammer gemäss US 3,342,333 A ein Propellerrührer zur Homogenisierung der Innenatmosphäre vorgesehen. Dies stellt allerdings eine aufwändige Infrastruktur dar, mit einem ziemlich grossen Volumen, in welchem eine chaotische und nur schwer zu kontrollierende Gasströmung erzeugt wird. Das chromatographische Entwicklungsverfahren ist ausserdem zeitgesteuert und passiv, d. h., dass die verschiedenen Verfahrensschritte gemäss einem fixen, vorbestimmten Zeitablauf ausgeführt werden und ohne, dass der eigentliche Verfahrensverlauf überwacht wird.

In der DE 2412524 A1 wird eine Kammer zur Verbesserung der Leistung und der Geschwindigkeit des chromatographischen Entwicklungsvorgangs durch Anwendung von Wärme und Druck beschrieben. Dabei sind zur Steuerung der Innenatmosphäre der Kammer Einlass- und Auslassöffnungen vorgesehen, wodurch Gase und Dämpfe aus dem Innern der Kammer gleichmässig und ohne starke Kanalbildung des Gasstroms, insbesondere nahe an der Plattenoberfläche, verteilt oder abgeführt werden können. Die Innenatmosphäre spielt die Rolle eines Puffervolumens zwischen den Einlass- und Auslassöffnungen, welches im Laufe der chromatographi-schen Entwicklung eine ungefähr konstante Zusammensetzung aufrechterhalten soll, und dessen Homogenisierung auf der Diffusion der chemischen Substanzen basiert. Diffusionsphänomene sind allerdings besonders langsam, wodurch Inhomogenitäten der Zusammensetzung der Innenatmosphäre entstehen können, insbesondere an der Grenzfläche zwischen der Platte und dem Rest des Volumens. Hier ist das chromatographische Entwicklungsverfahren auch zeitgesteuert und passiv. DE-4031909 offenbart ein Verfahren zur automatischen Chromatographie von Dünnschichtplatten für die Dünnschichtchromatographie mit einer Entwicklungskammer, in welcher eine Dünnschichtplatte vollständig eingeschlossen und von der äusseren Umgebung isoliert und abgedichtet wird, wobei sich in der Entwicklungskammer auf der Vorderseite der Trennschicht der Dünnschichtplatte ein Vorderraum befindet, umfassend eine chromatografische Entwicklung und eine Vorkonditionierung, wobei nach beendeter Entwicklung ein Luftstrom durch den Vorderraum erzeugt werden kann. An einem unteren Ende des Vorderraums befindet sich ein Fliessmitteltrog, in welchem die Dünnschichtplatte steht und mit ihrem unteren Ende eintaucht; der Vorderraum ist auch mit einem Einlass an einem Ende und einem Auslass am anderen Ende vorgesehen, wobei die Auslass-Eintrittsöffnung im Vorderraum ausserhalb des Fliessmitteltrogs mündet.

Die vorliegende Erfindung stellt sich nunmehr die Aufgabe, ein Verfahren und eine Vorrichtung zur automatischen Chromatographie von Dünnschichtplatten der eingangs genannten Art derart zu verbessern, dass eine bessere Kontrolle der die chromatographische Entwicklung beeinflussenden Parameter erreicht wird, insbesondere der physikalischen und chemischen Eigenschaften der Trennschicht in Bezug auf Aktivität und Selektivität und der Zusammensetzung der inneren Atmosphäre der Entwicklungskammer während der chromatographischen Entwicklung. Diese Aufgabe lösen ein Verfahren zur automatischen Chromatographie von Dünnschichtplatten gemäss Anspruch 1 und eine Vorrichtung zur Durchführung dieses Verfahrens gemäss Anspruch 6. Weitere Merkmale und Ausführungsbeispiele gehen aus den abhängigen Ansprüchen hervor.

In den Zeichnungen zeigt:
- Figur 1:: Gesamtansicht der erfindungsgemässen Vorrichtung mit Entwicklungskammer und Tür
- Figur 2a:: Seitenansicht der erfindungsgemässen Vorrichtung in offener Position, Entwicklungskammer im Schnitt
- Figur 2b:: Seitenansicht der erfindungsgemässen Vorrichtung in geschlossener Position, Entwicklungskammer im Schnitt
- Figur 3a:: Seitenansicht einer Ausführungsvariante der erfindungsgemässen Vorrichtung in offener Position, mit eingelegter Dünnschichtplatte, Entwicklungskammer im Schnitt
- Figur 3b:: Seitenansicht einer Ausführungsvariante der erfindungsgemässen Vorrichtung in geschlossener Position, mit eingelegter Dünnschichtplatte, Entwicklungskammer im Schnitt
- Figur 4:: Perspektivansicht einer Ausführungsvariante der Entwicklungskammer, im Schnitt gemäss Ebene A der Figur 3b
- Figur 5a:: Vorderansicht einer Ausführungsvariante der Entwicklungskammer, Schnitt durch Ebene B gemäss Figur 3b
- Figur 5b:: Ausführungsvariante des Laminisierungsbereichs, Vorderansicht
- Figur 6:: Detail der Entwicklungskammer mit eingelegter Dünnschichtplatte
- Figur 7:: Gesamtansicht einer Ausführungsvariante der erfindungsgemässen Vorrichtung
- Figur 8a:: Ausführungsvariante mit zwei halbzylindrischen Stegen, Entwicklungskammer offen
- Figur 8b:: Ausführungsvariante mit zwei halbzylindrischen Stegen, Entwicklungskammer geschlossen

Die Figuren stellen mögliche Ausführungsbeispiele dar, welche in der nachfolgenden Beschreibung erläutert werden.

Grundlagen der Erfindung sind ein Verfahren und eine Vorrichtung zur automatischen Chromatographie von Dünnschichtplatten mit einer Entwicklungskammer 1, in welcher eine Dünnschichtplatte D von der äusseren Umgebung isoliert und abgedichtet wird. Zur guten Isolierung und Abdichtung der Dünnschichtplatte D ist es wichtig, dass diese in der Entwicklungskammer 1 vollständig eingeschlossen wird, mit der gesamtem Trennschicht und dem Trägermaterial. Dank der Isolierung der Dünnschichtplatte D in der Entwicklungskammer 1 kann die chromatographische Entwicklung unter ganz bestimmten, einstellbaren, für den chromatographischen Entwicklungsvorgang vorteilhaften und vor allem genau reproduzierbaren Bedingungen erfolgen, in Unabhängigkeit von der äusseren Temperatur, Feuchtigkeit und/oder Druck. Dadurch wird eine viel bessere Reproduzierbarkeit der chromatographischen Entwicklungen erreicht, was platten- und standortübergreifende Vergleiche ermöglicht.

Im Folgenden werden zuerst das erfindungsgemässe Verfahren und dann die entsprechende Vorrichtung zur automatischen Chromatographie von Dünnschichtplatten beschrieben und deren Vorteile erläutert.

### Verfahren

Es können drei wesentliche Massnahmen zur besseren Qualität und Reproduzierbarkeit der Chromatographie der Dünnschichtplatte D beitragen: Die Vorbereitung der Trennschicht in Bezug auf Aktivität und Selektivität, die Vorbereitung bzw. Steuerung der Zusammensetzung der Innenatmosphäre der Entwicklungskammer 1 und die Durchführung dieser Verfahrensschritte in einer geschlossenen und kontrollierten Umgebung, wobei die Dünnschichtplatte D von der Umgebung gut isoliert und abgedichtet ist. Im erfindungsgemässen Verfahren wird die Zusammensetzung der Innenatmosphäre der Entwicklungskammer 1 gesteuert und die chromatografische Entwicklung erfolgt in einer geschlossenen und kontrollierten Umgebung, wobei die Dünnschichtplatte D von der Umgebung gut isoliert und abgedichtet ist. Zur Vorbereitung der Trennschicht und zur Vorbereitung bzw. Steuerung der Zusammensetzung der Innenatmosphäre wird das gewünschte Ergebnis mit einem Gasstrom erreicht, welcher durch die ganze Entwicklungskammer 1 hindurch erzeugt wird und eine bestimmte, durch den Benutzer festgelegte Zusammensetzung aufweist. Die Zusammensetzung der Innenatmosphäre der Entwicklungskammer 1 kann vor Beginn der chromatographischen Entwicklung eingestellt und/oder während der chromatographischen Entwicklung laufend gesteuert werden. Dies wird dadurch erreicht, dass der in die Entwicklungskammer 1 eintretende Gasstrom vor sich die Innenatmosphäre, die sich bereits in der Entwicklungskammer 1 befindet, aus der Entwicklungskammer 1 frontal heraustreibt, ohne Verwirbelungen und möglichst ohne sich damit zu vermischen. Dadurch wird die Innenatmosphäre nicht nur einfach umgewälzt, sondern vollständig ersetzt. Die vollständige Ersetzung der sich in der Entwicklungskammer 1 befindenden Innenatmosphäre mit dem eintretenden Gas mit kontrollierter Zusammensetzung ist eine einfache Methode zur Steuerung der Zusammensetzung der Innenatmosphäre. Diese ist somit beliebig einstellbar und kann während der chromatographischen Entwicklung je nach Anwendung zeitlich variieren oder konstant gehalten werden. Da die verschiedenen Verfahrensschritte in einer geschlossenen und kontrollieren Umgebung durchgeführt werden, muss der aus der Entwicklungskammer 1 austretende Gasstrom laufend regeneriert und seine Zusammensetzung auf die gewünschte Zusammensetzung zurückgesetzt werden, bevor er wieder in die Entwicklungskammer eingeführt wird.

Wichtig ist, dass die erzielte Innenatmosphäre über die gesamte Fläche der Dünnschichtplatte D möglichst einheitlich ist. Dafür muss die gesamte Innenatmosphäre in Bewegung gesetzt werden, ohne Ruhebereich oder stehende Gasphase. Zur Vermeidung von unkontrollierten Verwirbelungen und lokalen Uneinheitlichkeiten darf die Bewegung der Innenatmosphäre jedoch nicht chaotisch sein. Die Erzeugung eines laminaren Gasstroms ist also von Vorteil, weil damit eine regelmässige Bewegung der Innenatmosphäre erreicht wird. Besonders vorteilhaft ist es, wenn in der Entwicklungskammer 1 ein unidirektionaler laminarer Gasstrom mit parallelen Stromlinien und gleichmässigem Volumenstrom in der gesamten Entwicklungskammer 1 und über der gesamten Trennschichtoberfläche erzeugt wird. Von Vorteil ist es ausserdem, wenn der Volumenstrom des Gasstroms derart eingestellt ist, dass die durchfliessende Innenatmosphäre nur eine kurze Zeit in der Entwicklungskammer 1 bleibt, damit sich ihre Zusammensetzung während dem Durchfluss der Entwicklungskammer 1 nur unwesentlich verändert und immer wieder erneuert wird. Dadurch ist die Zusammensetzung der Innenatmosphäre in der gesamten Entwicklungskammer 1 und über die gesamte Trennschicht möglichst einheitlich und entspricht im Wesentlichen der Zusammensetzung des eintretenden Gasstroms. Es muss jedoch ein Kompromiss zwischen einem zu niedrigen und zu hohen Volumenstrom des Gasstroms gefunden werden, da ein zu hoher Volumenstrom auch negative Auswirkungen hat. Genau genommen wird demnach keine absolute Einheitlichkeit der Zusammensetzung der Innenatmosphäre in der Entwicklungskammer erreicht, sondern ein Grad i-ent in Stromrichtung zwischen den beiden sich stromaufwärts und stromabwärts befindenden Enden der Dünnschichtplatte D. Dies ist nicht besonders nachteilig, wenn die Zonen der Dünnschichtplatte D, die miteinander verglichen werden sollen, auf der gleichen Höhe rechtwinklig zur Stromrichtung liegen. Diese Zonen der Dünnschichtplatte D liegen auf der gleichen Höhe rechtwinklig zur Migrationsrichtung des Fliessmittels in der Trennschicht. In der bevorzugten Ausführungsvariante der Erfindung hat die Stromrichtung des Gasstroms daher einen Winkel von 0° oder 180° zur Migrationsrichtung des Fliessmittels in der Trennschicht, das heisst der Gasstrom fliesst vorzugsweise in Migrationsrichtung oder in der entgegengesetzten Richtung.

Die Vorbereitung der Trennschicht erfolgt vor Beginn der chromatographischen Entwicklung, so dass die Trennschicht zu Beginn der Entwicklung die gewünschten Eigenschaften aufweist. Dies wird dadurch erreicht, dass der in die Entwicklungskammer 1 eintretende Gasstrom auf die Trennschicht stark einwirkt. Dafür wird sichergestellt, dass an jeder gegebenen Stelle der Innenatmosphäre und der Trennschichtoberfläche ein kontrollierter Gasstrom erzeugt wird. Gemäss Erfindung ist die Innenatmosphäre nämlich kein Störfaktor, dessen Einfluss auf die Trennschicht (und während der chromatographischen Entwicklung auf die sich darin abwickelnden Vorgänge) zu minimieren ist, sondern ein vorteilhaftes Mittel zur präzisen Vorbereitung der Trennschicht und Steuerung der chromatographischen Entwicklung durch die direkte und kontrollierte Einwirkung eines Gasstroms mit genau bestimmter Zusammensetzung auf die Trennschichtoberfläche.

Zur optionalen Vorbereitung der Trennschicht in Bezug auf Aktivität und Selektivität kann die Dünnschichtplatte D vor der chromatographischen Entwicklung zwei wesentlichen Vorbereitungsschritten unterzogen werden. Der erste, optionale Vorbereitungsschritt kann die Aktivierung der Dünnschichtplatte D sein, wobei die Feuchtigkeit der Trennschicht eingestellt wird. Vorzugsweise soll durch die Aktivierung erreicht werden, dass eine bestimmte Menge an Wassermoleküle auf der stationären Phase adsorbiert wird. Wichtig ist jedenfalls, dass die Trennschicht nach der Aktivierung eine einheitliche, durch den Benutzer bestimmte Feuchtigkeit aufweist. Der zweite Vorbereitungsschritt ist die Vorkonditionierung, wobei die Innenatmosphäre mit einer bestimmten Gasphasenzusammensetzung gesättigt, und die Trennschicht mit bestimmten Substanzen definiert beladen wird. Die erwähnte Gasphasenzusammensetzung wird aus einer Mischung von Lösungsmitteln erzeugt, deren Eigenschaften je nach Anwendung sehr unterschiedlich sein können, um die gewünschte Trennung zu erreichen. Die Substanzen, mit welchen die Trennschicht definiert beladen wird, hängen auch stark von den zu trennenden Molekülen ab, und sind häufig gleich wie die mobile Phase. Die Trennschicht wird nicht unbedingt gesättigt, sondern definiert beladen, wobei eine Sättigung ein Spezialfall ist.

Für die Aktivierung weist der erzeugte Gasstrom die gewünschte Feuchtigkeit auf, und für die Vorkonditionierung ist der Gasstrom mit den gewünschten Lösungsmittelkomponenten gesättigt. Wichtig ist, dass die vorbereitete Trennschicht in Bezug auf Aktivität und Selektivität entweder über ihre gesamte Fläche einheitliche Eigenschaften oder einen Selektivitätsgradienten in der Richtung des Gasstroms aufweist. Dafür muss der erzeugte Gasstrom auf die gesamte Trennschichtoberfläche gleichmässig einwirken. Wie zuvor beschrieben, ist ein laminarer Gasstrom von Vorteil, insbesondere ein unidirektionaler laminarer Gasstrom mit einem gleichmässigen Volumenstrom über der gesamten Trennschichtoberfläche. Von Vorteil ist es ebenfalls, wenn der Volumenstrom des Gasstroms derart eingestellt ist, dass die durchfliessende Innenatmosphäre nur eine kurze Zeit in der Entwicklungskammer 1 bleibt, damit sich ihre Zusammensetzung während dem Durchfluss der Entwicklungskammer 1 nur unwesentlich verändert und immer wieder erneuert wird. Dies vermeidet, dass die Eigenschaften der Trennschicht auf gegenüberliegenden Seiten der Entwicklungskammer (nah am Gaseintritt und nah am Gasaustritt) allzu unterschiedlich sind. Vorzugsweise erfolgen die Aktivierung und die Vorkonditionierung nicht einfach empirisch und zeitgesteuert, sondern die Zusammensetzung der Innenatmosphäre (Feuchtigkeit und/oder Lösungsmittelgehalt usw.) kann gemessen und kontrolliert werden. Aufgrund der Abhängigkeit dieser Messungen von der Temperatur können diese für eine bessere Präzision mit Temperaturmessungen normiert werden. Mit diesen Messungen kann der genaue Zeitpunkt, zu dem die Aktivierung und die Vorkonditionierung vollständig abgeschlossen sind, automatisch ermittelt werden, und der nächste Verfahrensschritt sogleich automatisch gestartet werden.

Neben der Aktivierung, Vorkonditionierung und/oder der chromatographischen Entwicklung kann, in möglichen Ausführungsvarianten, das Verfahren auch noch weitere Schritte umfassen. Ein vorteilhafter Aspekt der Erfindung ist die komplette Automatisierung des Verfahrens, damit das ganze Verfahren autonom und ohne manuelle Interaktion durchläuft. Besonders vorteilhaft ist es weiterhin, wenn der genaue Zeitpunkt, zu dem ein Verfahrensschritt vollständig abgeschlossen ist oder ein gewünschter, vordefinierter Zustand erreicht wird, mit Sensoren automatisch ermittelt wird, damit der nächste Verfahrensschritt sogleich automatisch gestartet werden kann. Die Abfolge der Verfahrensschritte ist also nicht einfach zeitgesteuert. Bei einem rein zeitgesteuerten Ablauf werden die verschiedenen Verfahrensschritte gemäss einem fixen, vorbestimmten Zeitablauf ausgeführt, ohne Überprüfung des tatsächlichen Fortschritts jedes Verfahrensschritts. Um sicherzustellen, dass jeder Verfahrensschritt vollständig abgeschlossen ist, bevor der nächste gestartet wird, wird also die Dauer jedes Verfahrensschritts bewusst überschätzt. Dies führt bei einem komplexen Verfahren mit mehreren Schritten zu einem erheblichen kumulierten Zeitverlust. Die erfindungsgemässe automatische Ermittlung des Endes eines Verfahrensschritts mit Sensoren und die unmittelbare automatische Auslösung des nächsten Verfahrensschritts kann also zu einem erheblichen Zeitgewinn führen.

Hierunter eine Liste von möglichen zusätzlichen Verfahrensschritten (der Klarheit der Abfolge der Verfahrensschritte halber wurden die Aktivierung, Vorkonditionierung und die chromatographische Entwicklung auch erwähnt):
- Automatische Einführung der zu entwickelnden Dünnschichtplatte D in die Entwicklungskammer 1;
- Automatische Schliessung und Abdichtung der Entwicklungskammer 1 nach Einführung der Dünnschichtplatte D;
- Automatisch gesteuerte Aktivierung der Dünnschichtplatte D und Feuchteeinstellung;
- Automatisch gesteuerte Vorkonditionierung der Innenatmosphäre und der Trennschicht;
- Automatische Einführung eines Fliessmittels in die Entwicklungskammer 1 zu Beginn der chromatographischen Entwicklung;
- Chromatographische Entwicklung;
- Automatische Steuerung des Fliessmittelspiegels während der chromatographischen Entwicklung;
- Automatische Kontrolle der Migration des Fliessmittels durch die Trennschicht während der chromatographischen Entwicklung;
- Automatische Entfernung des Fliessmittels aus der Entwicklungskammer 1 am Ende der chromatographischen Entwicklung;
- Automatische Trocknung der Dünnschichtplatte D;
- Automatische Öffnung der Entwicklungskammer 1 und Entfernung der entwickelten Dünnschichtplatte D;
- Automatische Spülung der Entwicklungskammer 1 und anschliessende Trocknung.
- Automatische Kontrolle der Temperatur und/oder des Drucks in der Entwicklungskammer 1 während der Aktivierung, der Vorkonditionierung, der chromatographischen Entwicklung, der Trocknung und/oder der Spülung.
- Laufende Regenerierung des aus der Entwicklungskammer 1 austretenden Gasstroms und Zurücksetzung seiner Zusammensetzung auf die gewünschte Zusammensetzung, bevor er wieder in die Entwicklungskammer 1 eingeführt wird.

Im erfindungsgemässen Verfahren kann entweder eine dieser zusätzlichen Massnahmen alleine oder eine beliebige Kombination dieser Massnahmen eingesetzt werden. Im Folgenden werden die oben ausgeführten optionalen Schritte näher erläutert.

Die automatische Öffnung/Schliessung der Entwicklungskammer 1 und Einführung/Entfernung der Dünnschichtplatte D ermöglicht die Integrierung des vorliegenden Entwicklungsverfahrens und der entsprechenden Vorrichtung in einem grösseren automatischen Prozess. Dabei könnten z.B. in einem ersten Verfahrensschritt die Proben auf die Dünnschichtplatten D aufgetragen, die Dünnschichtplatten D dann zur erfindungsgemässen Vorrichtung gebracht und nach der chromatographischen Entwicklung schliesslich einem weiteren Modul, zum Beispiel zur Auswertung, weitergeleitet werden.

Die automatische Einführung und Entfernung des Fliessmittels in die Entwicklungskammer 1 ermöglicht es, das Fliessmittel zum richtigen Zeitpunkt (vor Beginn und nach der chromatographischen Entwicklung) automatisch einzuführen und zu entfernen.

Während der chromatographischen Entwicklung wird ein Teil des Fliessmittels von der Dünnschichtplatte D aufgenommen, und ein anderer Teil verdampft in der Entwicklungskammer 1. Um dieses Fliessmittel zu ersetzen und über die gesamte Dauer der chromatographischen Entwicklung einen konstanten Fliessmittelspiegel zu gewährleisten, muss die Entwicklungskammer 1 ständig mit Fliessmittel nachgefüllt werden. Mit der automatischen Steuerung des Fliessmittelspiegels wird die Entwicklungszeit reduziert und sichergestellt, dass die chromatographische Entwicklung unter möglichst reproduzierbaren Bedingungen erfolgt.

Die Kontrolle der Migration des Fliessmittels ist besonders wichtig, weil die meisten chromatographischen Entwicklungen beim Erreichen einer definierten Migrationshöhe rechtzeitig beendet werden müssen. Sobald das Fliessmittelfront in der Trennschicht eine durch den Benutzer definierte Höhe erreicht hat, kann dies dem Benutzer signalisiert werden und/oder das Fliessmittel von der Entwicklungskammer 1 automatisch entfernt werden und/oder die Dünnschichtplatte D automatisch getrocknet werden.

Zur Trocknung der Dünnschichtplatte D nach der chromatographischen Entwicklung kann in der Entwicklungskammer 1 ein starker, evtl. warmer Gasstrom erzeugt werden. Während der Trocknung der Dünnschichtplatte D verdampft das übrige Fliessmittel und wird aus der Entwicklungskammer 1 komplett entfernt. Dies ist besonders vorteilhaft, wenn ein gesundheitsschädigendes Fliessmittel benutzt wird, damit der Benutzer diesem möglichst wenig ausgesetzt wird. Zur Beschleunigung der Trocknung und der Verdampfung des Fliessmittels kann in der Entwicklungskammer 1 auch ein Teilvakuum erzeugt werden. Nach der Trocknung kann die Dünnschichtplatte D aus der Entwicklungskammer 1 genommen und analysiert werden.

Um Verschleppungen zu vermeiden, ist es besonders vorteilhaft, wenn die Entwicklungskammer 1 ganz am Anfang und/oder ganz am Ende jedes chromatographischen Entwicklungsverfahrens automatisch gespült und gereinigt wird. Dafür wird in die Entwicklungskammer eine Spülflüssigkeit eingebracht, welche darin eine gewisse Zeit verbleibt (z.B. zur Auflösung von Rückständen), bevor sie wieder abgeführt wird. Um dies zu beschleunigen, kann die Spülflüssigkeit mit einem Gasstrom aus der Entwicklungskammer 1 getrieben und die Entwicklungskammer 1 danach auch gleich mit einem Gasstrom getrocknet werden.

Besonders vorteilhaft ist es, wenn die innere Temperatur und/oder der innere Druck der Entwicklungskammer 1 während der Aktivierung, der Vorkonditionierung, der chromatographischen Entwicklung, der Trocknung und/oder der Spülung automatisch kontrolliert und gesteuert wird. Eine erhöhte Temperatur kann beispielsweise Vorgänge wie die Migration des Fliessmittels in der Trennschicht, die Verdampfung des Fliessmittels, die Auflösung von Rückständen während der Spülung usw. beschleunigen oder verlangsamen. Die Einstellung von Temperatur und Druck ist auch von Vorteil, um die Druck- und Temperaturbedingungen von vorherigen chromatographischen Entwicklungen in der Entwicklungskammer 1 künstlich zu reproduzierenden, beispielsweise für platten- und standortübergreifende Vergleiche.

### Vorrichtung

Die erfindungsgemässe Vorrichtung wird im Anspruch 6 definiert. Sie umfasst eine Entwicklungskammer 1, in welcher eine Dünnschichtplatte D vollständig einschliessbar und von der äusseren Umgebung isolierbar und abdichtbar ist, wobei sich in der Entwicklungskammer 1 auf der Vorderseite der Trennschicht der Dünnschichtplatte D ein Vorderraum 31 befindet, und sich an einem unteren Ende des Vorderraums 31 ein Fliessmitteltrog 11 befindet, in welchem die in der Entwicklungskammer einschliessbare Dünnschichtplatte D steht und mit ihrem unteren Ende eintaucht. An einem Ende des Vorderraums 31 ist mindestens ein Einlass 14 und am anderen Ende des Vorderraums 31 ist mindestens ein Auslass 15 vorgesehen, wobei der Auslass 15 eine Auslass-Eintrittsöffnung 151 aufweist, die im Vorderraum 31 ausserhalb des Fliessmitteltrogs mündet, und die Tiefe d1 des Vorderraums 31 zwischen 1 und 3 mm beträgt.

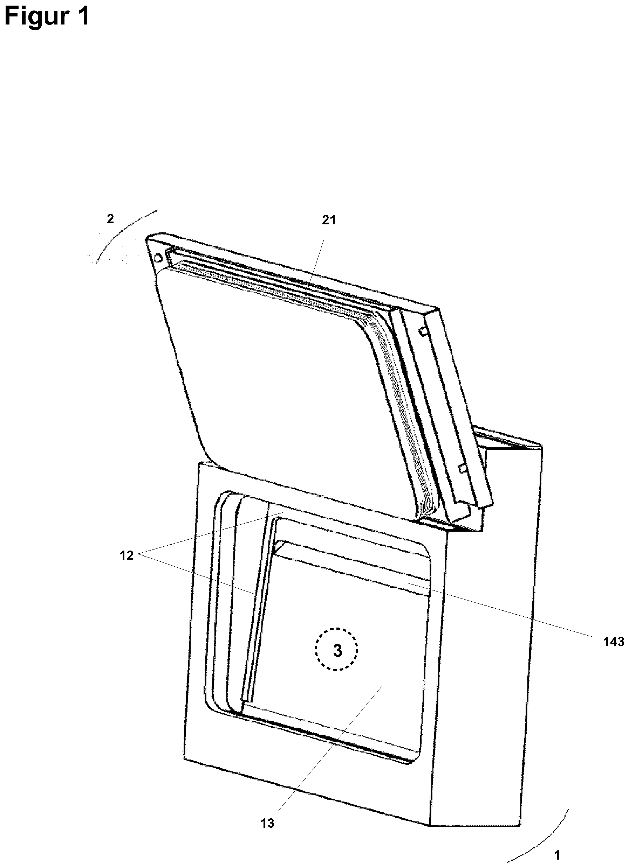

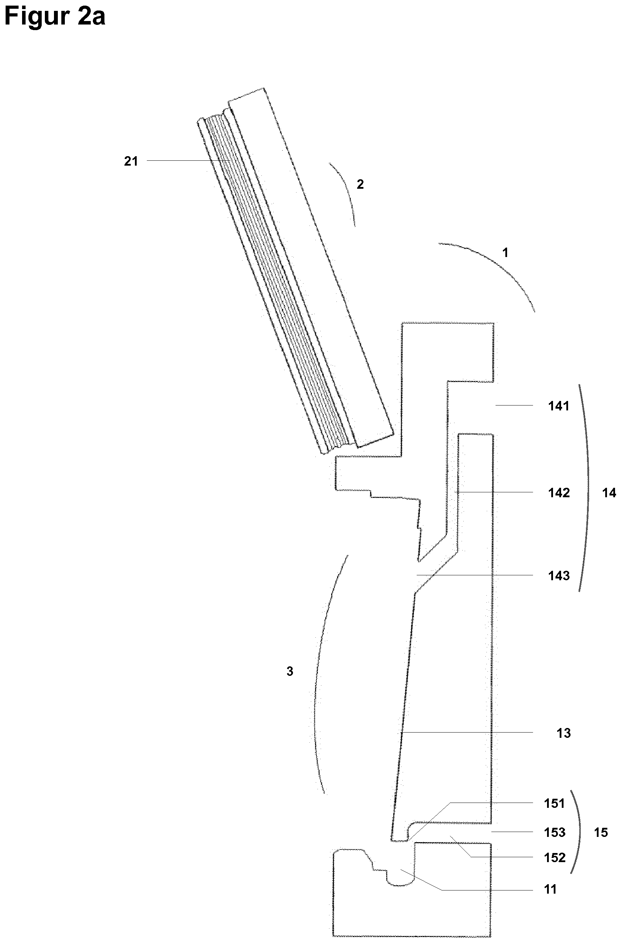

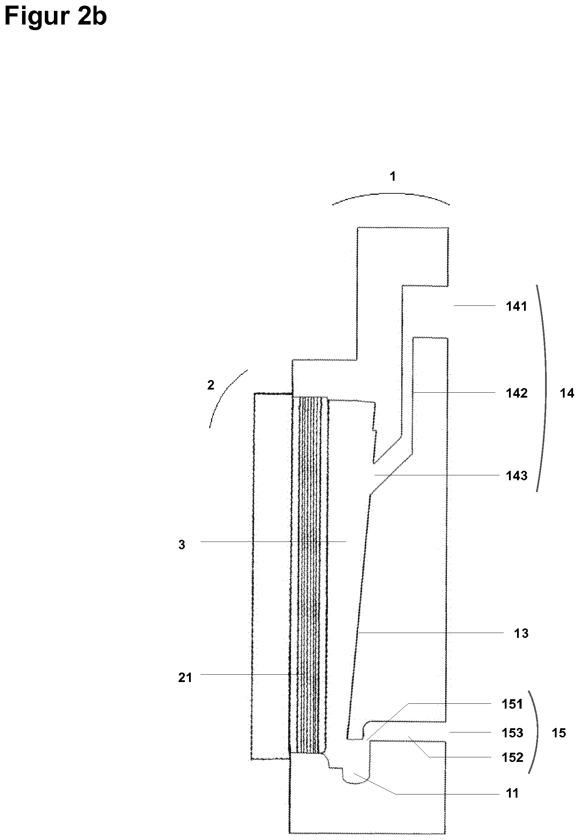

In einer Ausführungsvariante besteht die Vorrichtung aus einer Entwicklungskammer 1 mit einer Tür 2, die zwischen einer offenen und einer geschlossenen Position bewegbar ist (Figuren 1 und 2a-b). In der geschlossenen Position wird im Innenraum 3 der Entwicklungskammer 1 eine Innenatmosphäre eingeschlossen und von der Umgebung komplett isoliert und abgedichtet (Figur 2b). Die gute Abdichtung des Innenraums 3 ist entscheidend, um diesen während der Aktivierung, der Vorkonditionierung und der chromatographischen Entwicklung von den äusseren Einflüssen möglichst zu isolieren und in der Entwicklungskammer 1 möglichst reproduzierbare Bedingungen zu schaffen. Dies ist auch bei der Benutzung von gesundheitsschädigenden Substanzen im Innenraum 3 besonders vorteilhaft, damit der Benutzer diesen Stoffen möglichst wenig ausgesetzt wird. Zur guten Abdichtung des Innenraums 3 ist die Tür 2 und/oder die Entwicklungskammer 1 mit einer Abdichtung 21 versehen, beispielsweise aus einem Elastomer wie Gummi.

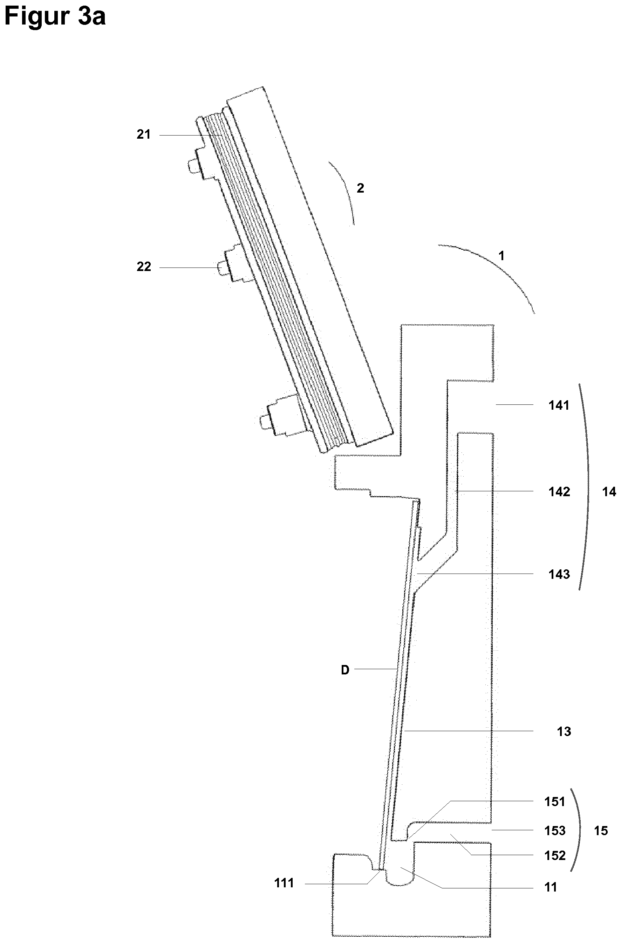

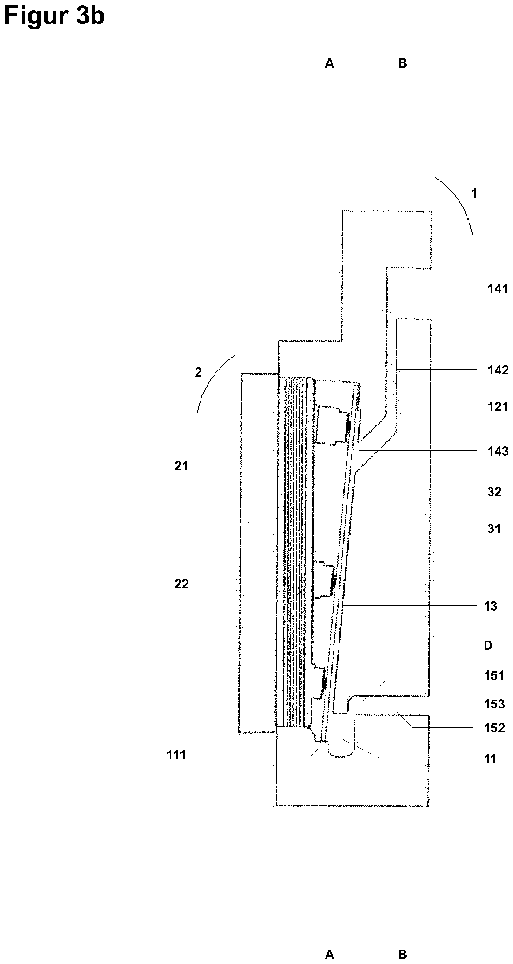

Die Entwicklungskammer 1 und der Innenraum 3 sind zur Einlegung einer Dünnschichtplatte D optimiert. In der Erfindung ist der Innenraum 3 im Wesentlichen vertikal orientiert und am unteren Ende des Innenraums 3 ist ein Fliessmitteltrog 11 vorgesehen ( Figuren 2a-b und 3a-b ). Die Dünnschichtplatte D wird in den Fliessmitteltrog 11 gestellt, beispielsweise auf einen Halter 111, so dass sie während der chromatographischen Entwicklung mit dem unteren Ende im Fliessmittel eintaucht und gegen eine Wand des Innenraums 3 anlehnt (Figuren 3a-b).

Erfindungsgemäss ist vorgesehen, die Dünnschichtplatte D in einem möglichst kleinen Innenraum 3 mit einem möglichst kleinen Volumen der Innenatmosphäre zu isolieren: Ein kleines Gasvolumen kann viel einfacher gesteuert, rascher geändert und somit einheitlicher gehalten werden, als ein grosses Volumen. Besonders vorteilhaft ist es also, wenn die Höhe und Breite des Innenraums 3 ungefähr der Höhe und Breite der zu entwickelnden Dünnschichtplatte D entspricht ( Figuren 3a-b ).

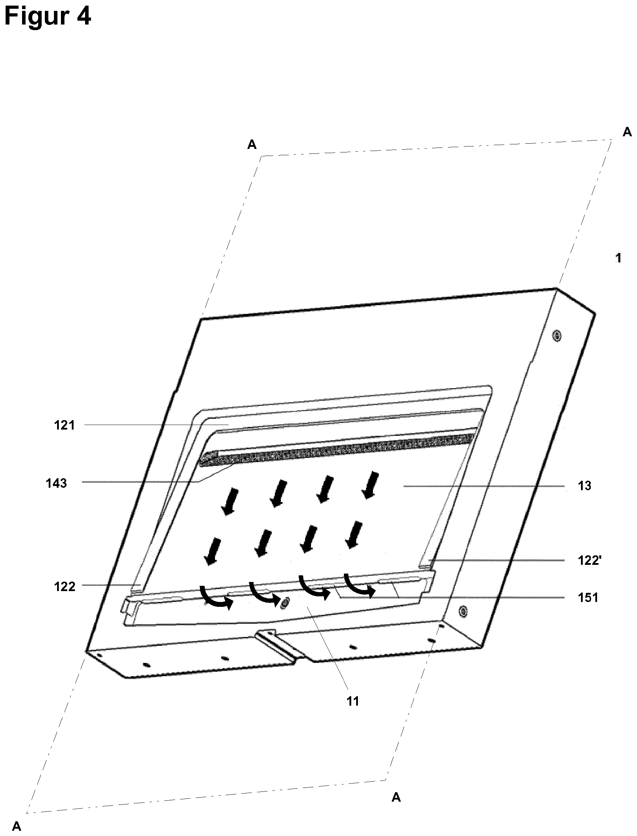

Um das Volumen der Innenatmosphäre noch weiter zu reduzieren, wird erfindungsgemäss die Vorderseite der Dünnschichtplatte D, auf welcher sich die Trennschicht befindet, von der Rückseite der Dünnschichtplatte D isoliert. Da sich der chromatographische Entwicklungsvorgang nur in der Trennschicht, auf der Vorderseite der Dünnschichtplatte D, abwickelt, kann die Innenatmosphäre so auf einen Vorderraum 31, der sich unmittelbar vor der Trennschicht befindet, beschränkt werden. Die Isolierung des Vorderraums 31 erfolgt mittels einer U-förmigen erhöhten Stützfläche 12 der Rückwand 13 des Innenraums 3, gegen welche die Vorderseite der Dünnschichtplatte D angelehnt wird (Figur 1). Im Vorderraum 31 eingeschlossen wird also der Raum, welcher sich zwischen der Vorderseite der Dünnschichtplatte D und der Rückwand 13 des Innenraums 3 befindet, und welcher von der Stützfläche 12 seitlich umgeben ist. In der bevorzugten Ausführungsvariante der Erfindung besteht die Stützfläche 12 aus einem oberen Teil 121 und zwei lateralen Teilen 122, 122' (Figu- ren 3a-b und 4). Der obere Teil 121 der Stützfläche 12 läuft entlang der gesamten Länge des oberen Rands der Rückwand 13, und die zwei lateralen Teile 122, 122' laufen entlang der gesamten Länge beider lateralen Ränder der Rückwand 13, so dass der Vorderraum 31 von der Stützfläche 12 auf mindestens 3 Seiten zumindest teilweise umgeben ist (Figur 4). Das Fliessmittel, in welchem das untere Ende der Dünnschichtplatte D während der chromatographischen Entwicklung eintaucht, gewährleistet die Isolierung des Vorderraums 31 auf der vierten, unteren Seite. Der Vorderraum 31 und die darin enthaltene Innenatmosphäre sind somit auf allen Seiten zumindest teilweise abgegrenzt. Wenn in der vorliegenden Beschreibung von der "gesamten Trennschichtoberfläche" die Rede ist (z.B. im Zusammenhang mit der Innenatmosphäre, welche auf der gesamten Trennschichtoberfläche einheitlich sein muss und mit dem Gasstrom, welcher auf die gesamten Trennschichtoberfläche einheitlich einwirken muss), ist eigentlich der zentrale Bereich der Trennschichtoberfläche (auch "Region of Interest" (ROI) genannt) gemeint, welcher in Kontakt mit der sich im Vorderraum 31 befindenden Innenatmosphäre steht, da ja gewisse Bereiche der Trennschichtoberfläche um die Ränder der Dünnschichtplatte D in Kontakt mit der Stützfläche 12 stehen oder im Fliessmittel eintauchen.

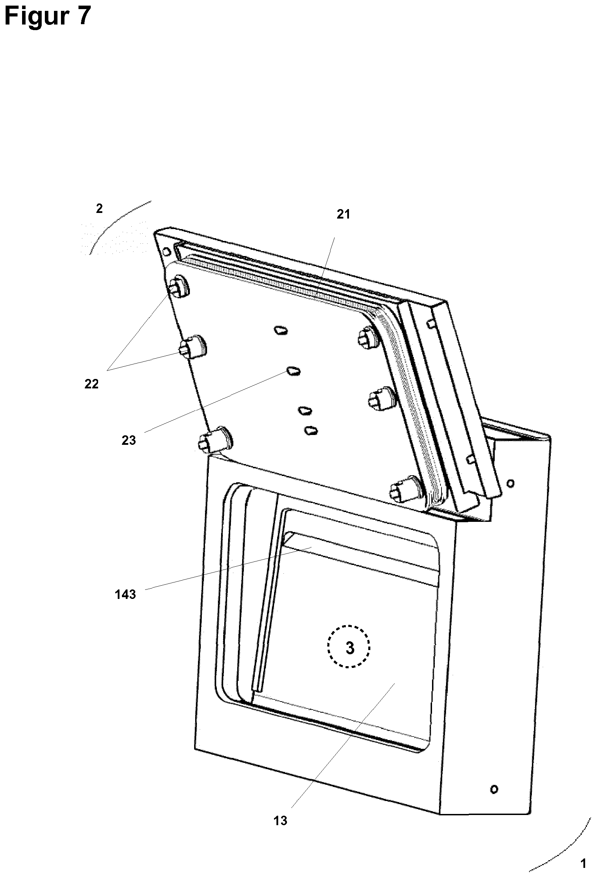

Zur guten Isolierung des Vorderraums 31 von der Rückseite der Dünnschichtplatte D kann die Stützfläche 12 aus abdichtendem Material bestehen oder mit abdichtendem Material beschichtet sein. Versuche haben jedoch gezeigt, dass eine hinreichende Isolierung erreicht wird, wenn die Stützfläche aus demselben Material wie die Entwicklungskammer 1 besteht und eine Breite von ca. 1-2 cm aufweist. Zur besseren Isolierung kann die Dünnschichtplatte D auch gegen die Stützfläche 12 gedrückt werden, beispielsweise mittels Plattendrücker 22, die an der Innenseite der Tür 2 angeordnet sind (Figur 3a-b und Figur 7).

Die Rückseite der Dünnschichtplatte D besteht aus dem Trägermaterial, oft Glas, auf welchem die Trennschicht aufgetragen ist. Die Atmosphäre des Hinterraums 32, der sich auf der Rückseite der Dünnschichtplatte D befindet, spielt also keine wichtige Rolle während der Aktivierung, der Vorkonditionierung und der chromatographischen Entwicklung und muss nicht unbedingt gesteuert bzw. kontrolliert werden. Im Nachfolgenden wird also mit "Innenatmosphäre" die Gasphase bezeichnet, die sich im Vorderraum 31 vor der Trennschicht der Dünnschichtplatte D befindet.

Zur Steuerung der Innenatmosphäre ist die Entwicklungskammer 1 mit mindestens einem Einlass 14 und mindestens einem Auslass 15 versehen, durch welche Gase oder Flüssigkeiten in bzw. aus dem Vorderraum 31 durch Einblasen und/oder Aussaugen gefördert werden können (Figuren 2a-b). Der mindestens eine Einlass 14 besteht aus mindestens einer Einlass-Eintrittsöffnung 141, mindestens einem Einlass-Kanal 142 und mindestens einer Einlass-Austrittsöffnung 143, die im Vorderraum 31 mündet. Ebenso besteht der mindestens eine Auslass 15 aus mindestens einer Auslass-Eintrittsöffnung 151, die im Vorderraum 31 mündet, mindestens einem Auslass-Kanal 152 und mindestens einer Auslass-Austrittsöffnung 153. Die Anordnung und Geometrie dieser verschiedenen Öffnungen sowie die interne Struktur der Einlass- und Auslass-Kanäle 142, 152 sind für die Erzeugung eines durchgehenden starken Gasstroms im ganzen Vorderraum 31 optimiert. Damit der Gasstrom auch während der chromatographischen Entwicklung erzeugt werden kann, wenn der Fliessmitteltrog mit Fliessmittel gefüllt ist, müssen die Einlass-Austrittsöffnung 143 und die Auslass-Eintrittsöffnung 151 ausserhalb des Fliessmitteltrogs 11 angeordnet werden, über dem Fliessmittelspiegel.

Von Vorteil ist es, wenn die Stromrichtung des Gasstroms einen Winkel von 0° oder 180° zur Migrationsrichtung des Fliessmittels in der Trennschicht hat. Normalerweise ist der Fliessmitteltrog 11 am unteren Ende des Vorderraums 31 angeordnet und das Fliessmittel bewegt sich in der Trennschicht aufwärts, senkrecht zum Fliessmittelspiegel. So kann die Einlass-Austrittsöffnung 143 in der Nähe des oberen Endes des Vorderraums 31 und die Auslass-Eintrittsöffnung 151 am unteren Ende des Vorderraums 31 angeordnet werden, oder umgekehrt, wobei sich beide Öffnungen ausserhalb des Fliessmitteltrogs 11 befinden.

In der bevorzugten Ausführungsvariante der Erfindung befindet sich die mindestens eine Einlass-Austrittsöffnung 143 in der Nähe des oberen Endes der Rückwand 13 und die mindestens eine Auslass-Eintrittsöffnung 151 am unteren Ende der Rückwand 13. Zudem sind die Einlass-Austrittsöffnungen 143 und die Auslass-Eintrittsöffnungen 151 möglichst auf der ganzen Breite der Rückwand 13 angeordnet. Alternativ ist es auch möglich, eine einzige breite Einlass-Austrittsöffnung 143 und/oder Auslass-Eintrittsöffnung 151 vorzusehen. In der Ausführungsvariante der Figur 4 gibt es beispielsweise nur eine breite Einlass-Austrittsöffnung 143 und vier Auslass-Eintrittsöffnungen 151 mit gleichem Abstand. Diese Massnahmen ermöglichen es, einen Gasstrom mit geradlinigen und parallelen Fliesslinien durch den ganzen Vorderraum 31 hindurch zu erzeugen, ohne Ruhebereich und ohne stehende oder schlecht erneuerte Innenatmosphäre (Figur 4).

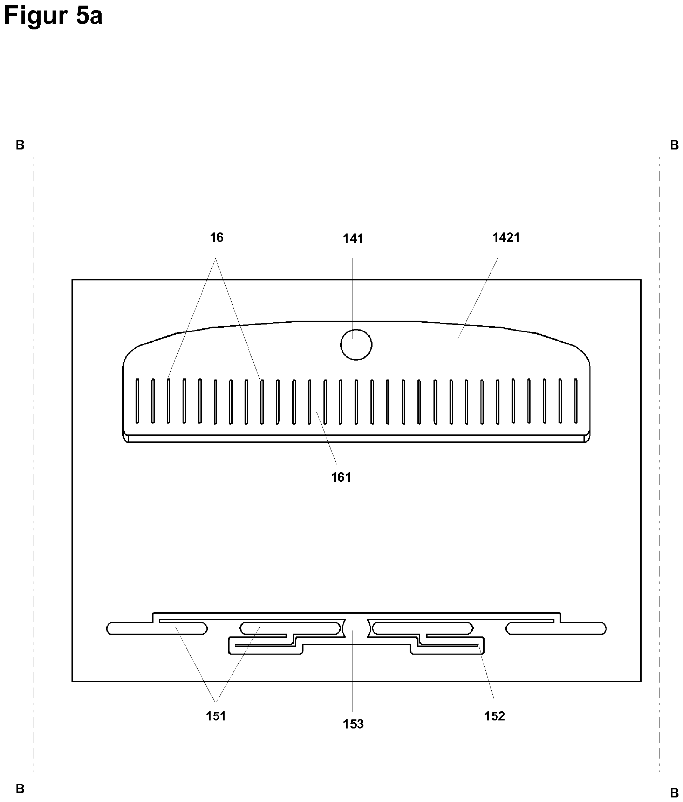

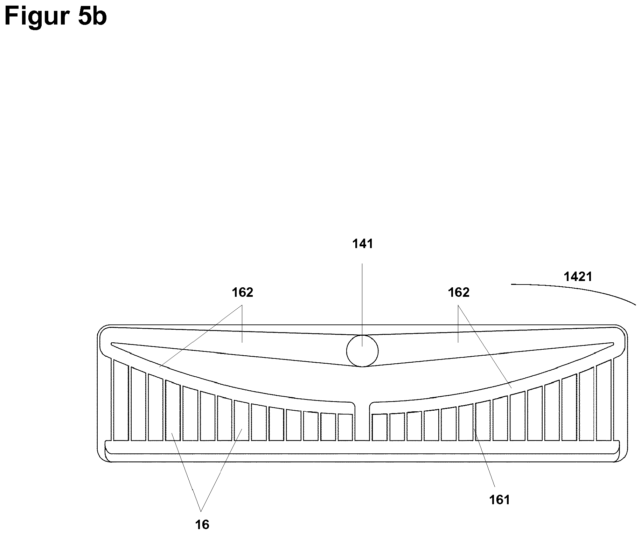

In einer möglichen Ausführungsvariante der Erfindung ist die interne Struktur des Einlass-Kanals 142 ausserdem derart, dass der im Vorderraum 31 eintretende Gasstrom laminar und auf die gesamte Breite der Einlass-Austrittsöffnung 143 verteilt ist. Dafür besteht der Einlass-Kanal 142 aus zwei Teilen: einem Laminisierungsbereich 1421, auf welchen die Einlass-Eintrittsöffnung 141 mündet, und einem schrägen Segment 1422, welches auf den Vorderraum 31 mündet (Figuren 2a-b und 3a-b). Der Laminisierungsbereich 1421 weist dieselbe Breite wie die Einlass-Austrittsöffnung 143 auf und ist mit mehreren Lamellen 16 versehen. In einer einfachen Ausführungsvariante der Erfindung haben die Lamellen 16 alle die gleiche Grösse, und sie sind parallel und in regelmässigem Abstand angeordnet (Figur 5a). Die Lamellen 16 verteilen den einkommenden Gasstrom der Einlass-Eintrittsöffnung 141 über die ganze Breite des Laminisierungsbereichs 1421 und erzeugen einen laminaren Gasstrom, indem sie diesen zwischen den Lamellen 16 in geradlinigen und parallelen Kanälen 161 führen. Zur besseren Verteilung des Gasstroms ist es auch denkbar, die Lamellen 16 in anderen Ausführungsvarianten schräg (nicht parallel, z.B. in radialer Richtung in Bezug auf die Einlass-Eintrittsöffnung 141) anzuordnen. In der Ausführungsvariante der Figur 5b wird der in den Laminisierungsbereich 1421 eintretende Gasstrom durch zwei Gänge 162 geleitet und zu schmalen parallelen Kanälen 161 mit unterschiedlichen Längen geführt. Damit der Gasstrom über die verschiedenen Kanäle 161 gleichmässig verteilt wird, sind die Kanäle 161 desto kürzer, je weiter sie vom Eintritt des Laminisierungsbereichs 1421 (von der Einlass-Eintrittsöffnung 141) entfernt sind. Nach dem Laminisierungsbereich 1421 wird der laminare Gasstrom über das schräge Segment 1422 im Vorderraum 31 eingeführt. Das schräge Segment 1422 weist dieselbe Breite wie die Einlass-Austrittsöffnung 143 auf, und hat einen gewissen Neigungswinkel mit der Fliessrichtung des Gasstroms im Laminisierungsbereich 1421 (Figuren 2a-b und 3a-b). Dieser Neigungswinkel muss möglichst klein sein, damit der Wechsel der Fliessrichtung keine Verwirbelungen verursacht und den laminaren Gasstrom möglichst bewahrt. Besonders vorteilhaft ist es, wenn der Neigungswinkel des schrägen Segments 1422 maximal 45° beträgt.

In der bevorzugten Ausführungsvariante der Erfindung ist die interne Struktur des Auslass-Kanals 152 derart, dass der Gasstrom die Entwicklungskammer 1 durch die verschiedenen Auslass-Eintrittsöffnungen 151 und somit auf die gesamte Breite des Vorderraums 31 einheitlich verlässt. Beispielsweise ist jede Auslass-Eintrittsöffnung 151 mit einem eigenen Auslass-Kanal 152 zur Auslass-Austrittsöffnung 153 verbunden, wobei jeder Auslass-Kanal 152 dieselbe Länge aufweist. Dafür können die Auslass-Kanäle 152 gewisser Auslass-Eintrittsöffnungen 151 beispielsweise mehrfach gebogen oder zickzackförmig sein (Figur 5).

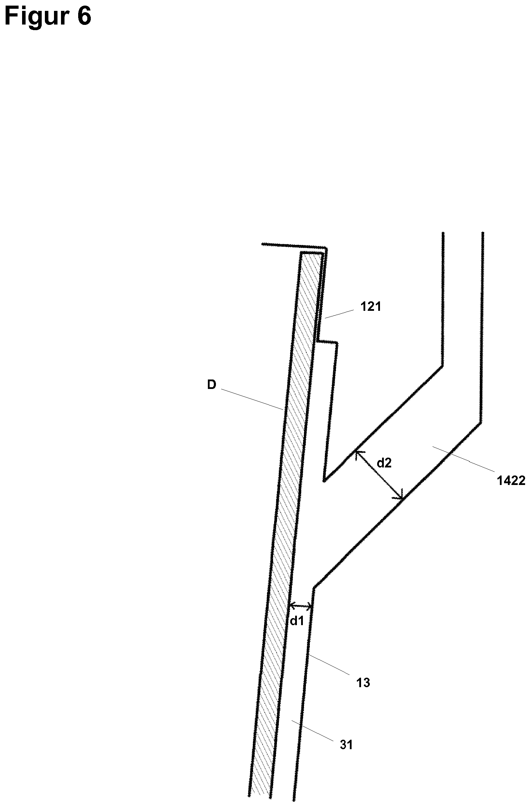

Die oben beschriebene Anordnung und Geometrie der Einlass- und Auslass-Kanäle 142, 152 und der dazugehörigen Öffnungen ermöglicht es, an einem Ende des Vorderraums 31 einen laminaren Gasstrom einzuführen und die Innenatmosphäre am anderen Ende des Vorderraums 31 evtl. wieder herauszusaugen, so dass durch den ganzen Vorderraum 31 hindurch ein einheitlicher laminarer Gasstrom erzeugt wird. Um den laminaren Charakter des eintretenden Gasstroms über die gesamte Trennschichtoberfläche zu bewahren, muss die Tiefe d1 des Vorderraums 31, d.h. der Abstand zwischen der Vorderseite der Dünnschichtplatte D und der Rückwand 13 des Innenraums 3, ziemlich klein sein. Die Tiefe d1 des Vorderraums 31 entspricht der Höhe der Stützfläche 12 über die Rückwand 13, welche in der bevorzugten Ausführungsvariante zwischen 1 und 3 mm, vorzugsweise ca. 2 mm beträgt, ausser im Bereich der Fliessmitteltrogs 11, am unteren Ende des Vorderraums 31). Versuche haben gezeigt, dass mit Tiefen d1 von mehr als 3 mm im Vorderraum 31 unerwünschte Verwirbelungen entstehen, und dass bei Tiefen d1 von weniger als 1 mm Kapillarkräfte unerwünschte Artefakte verursachen. Vorteilhaft ist es ausserdem, wenn die Tiefe d1 des Vorderraums 31 kleiner als der Durchmesser d2 des schrägen Segments 1422 ist, so dass das Eintreten in den Vorderraum 31 eine Verengung des Gasstroms darstellt (Figur 6). Dies gewährleistet, dass der eintretende Gasstrom vor sich die Innenatmosphäre, die sich bereits in der Entwicklungskammer 1 befindet, aus der Entwicklungskammer 1 ohne Verwirbelungen und ohne sich damit zu vermischen auf einmal heraustreibt. Dadurch wird auch der gewünschte Volumenstrom des Gasstroms und starke Einwirkung des Gasstroms auf die Trennschichtoberfläche erreicht. Mit dem durchgehenden unidirektionalen, laminaren Gasstrom wird die Innenatmosphäre nicht nur einfach umgewälzt, sondern stets und vollständig erneuert.

Die Rückwand 13 des Innenraums 3 ist vorzugsweise eben und parallel zur Stützfläche 12, so dass die Rückwand 13 auch parallel zur Trennschichtoberfläche ist und der Vorderraum 31 eine gleichmässige Tiefe d1 aufweist. Je nach Ausführungsform können die Stützfläche 12 und die Rückwand 13 jedoch auch andere Geometrien aufweisen. Beispielsweise könnte die Rückwand 13 auch Rillen aufweisen, die parallel zur Fliessrichtung des Gasstroms orientiert sind.

In der Entwicklungskammer 1 sind mindestens eine Fliessmittelzufuhr und eine Fliessmittelabfuhr vorgesehen, wodurch der Fliessmitteltrog 11 vor der chromatographischen Entwicklung mit Fliessmittel aufgefüllt und nachher wieder geleert werden kann. Optimal für die chromatographische Entwicklung ist es, wenn die untersten ca. 5 mm der Dünnschichtplatte D im Fliessmittel eintauchen. Zur vollständigen Entleerung des Fliessmitteltrogs 11 ist die Fliessmittelabfuhr vorteilhaft an der tiefsten Stelle des Fliessmitteltrogs 11 angeordnet. Zur automatischen Steuerung der Auffüllung und der Entleerung des Fliessmitteltrogs 11 können in der Entwicklungskammer 1 auch Sensoren, insbesondere optische Sensoren, eingebaut werden. Solche Sensoren können auch zur stetigen Steuerung des Fliessmittelspiegels während der chromatographischen Entwicklung dienen. Mit diesen Sensoren kann auch der genaue Zeitpunkt, zu dem der Fliessmitteltrog 11 vollständig geleert oder gefüllt ist, automatisch ermittelt werden, und der nächste Verfahrensschritt sogleich automatisch gestartet werden.

Zur Kontrolle der Migration des Fliessmittels auf die Trennschicht während der chromatographischen Entwicklung können in der Rückwand 13 der Entwicklungskammer 1 oder in der Tür 2 eine oder mehrere Öffnungen vorgesehen werden, beispielsweise für optische Sensoren. Falls Dünnschichtplatten D mit durchsichtigem Trägermaterial wie Glas eingesetzt werden, können die Öffnungen 23 und die Sensoren in der Tür 2 angeordnet werden und die Migration des Fliessmittels in der Trennschicht durch das Trägermaterial verfolgen (Figur 7). Mit diesen Sensoren kann der genaue Zeitpunkt, zu dem die Fliessmittelfront die gewünschte Laufstrecke erreicht hat, automatisch ermittelt werden, und der nächste Verfahrensschritt sogleich automatisch gestartet werden.

Die vorgestellte Vorrichtung zur automatischen Chromatographie von Dünnschichtplatten D ist nicht nur für die chromatographische Entwicklung selbst, sondern auch zur Durchführung der eingangs aufgelisteten zusätzlichen Verfahrensschritte gut geeignet, wie nachfolgend erläutert.

Für die automatische Einführung/Entfernung der Dünnschichtplatte D in/aus der Entwicklungskammer 1 können Mittel für den Plattentransport (z.B. ein Förderband) und für die Plattenpositionierung vorgesehen werden. Mit einer Kippmechanik können beispielsweise flachliegende Dünnschichtplatten D in eine vertikale Ausrichtung gekippt werden und gegen die Rückwand 13 des Innenraums 3 angelehnt werden.

Der Einlass 14 und der Auslass 15 sind auch zur Erzeugung des für die Aktivierung benötigten Gasstroms gut geeignet. Mit den oben beschriebenen Anordnungen und Geometrien der Einlass- und Auslass-Kanäle 142, 152 und der dazugehörigen Öffnungen ist der durch den Vorderraum 31 erzeugte Gasstrom ausserdem laminar. Der laminare Charakter des Gasstroms gewährleistet eine einheitliche Befeuchtung der Trennschicht. Dank der starken Einwirkung des Gasstroms auf die Trennschichtoberfläche wird die gewünschte Feuchtigkeit mit der erfindungsgemässen Vorrichtung in etwa 5 Minuten erreicht, während dies mit herkömmlichen Massnahmen typischerweise 10 Minuten in Anspruch nehmen kann. Zur Kontrolle der Feuchtigkeit und/oder der Temperatur des Gasstroms kann die erfindungsgemässe Vorrichtung ausserdem Feuchtigkeits- und/oder Temperatursensoren aufweisen. Mit diesen Sensoren kann der genaue Zeitpunkt, zu dem auf der Trennschicht die gewünschte Wassermenge erreicht ist, automatisch ermittelt werden, und der nächste Verfahrensschritt sogleich automatisch gestartet werden. Sobald die Beladung der stationären Phase mit Wassermolekülen im Gleichgewicht mit der relativen Feuchte des Gasstroms ist, nimmt die Trennschicht keine Wassermoleküle mehr auf.

Dasselbe gilt für die Vorkonditionierung. Auch hier ermöglicht die Erfindung eine erhebliche Zeitersparnis: Dank des sehr beschränkten Volumens der Innenatmosphäre und des unidirektionalen, laminaren eintretenden Gasstroms, welches die Innenatmosphäre vor sich aus dem Vorderraum 31 auf einmal heraustreibt, ohne Verwirbelungen und ohne sich damit zu vermischen, erfolgt die gewünschte Beladung der Trennschicht und der Innenatmosphäre extrem schnell.

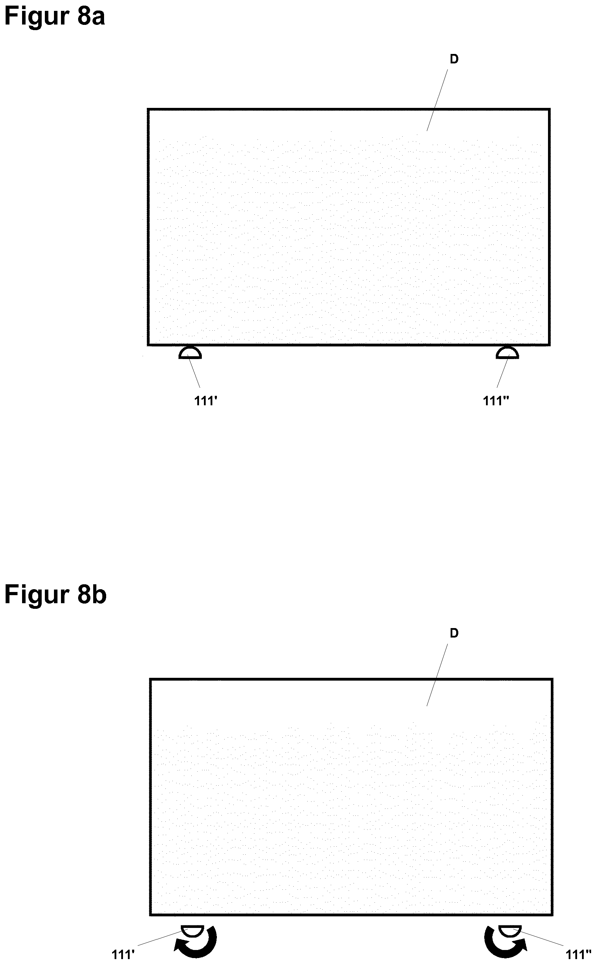

Für die Trocknung kann der starke, evtl. warme Gasstrom entweder durch den Einlass 14 und den Auslass 15, oder durch zusätzliche Gaseinlässe und Gasauslässe erzeugt werden. Versuche haben gezeigt, dass Kontaktpunkte zwischen dem unteren Rand der Dünnschichtplatte D und dem Halter 111, auf welchem die Dünnschichtplatte D gestellt wird, schwer zu trocknen sind. Das Fliessmittel, welches dazwischen gefangen bleibt, kann Artefakte im Chromatogramm verursachen. In der bevorzugten Ausführungsvariante der Erfindung gibt es in der geschlossenen Entwicklungskammer 1 keinen Kontakt zwischen der Dünnschichtplatte D und dem Halter 111. Dies kann beispielsweise dadurch erreicht werden, dass der Halter 111 bei oder nach der Schliessung der Tür 2 vom unteren Rand der Dünnschichtplatte D wegbewegt wird. Dabei hält die Dünnschichtplatte D ihre Position durch Einklemmung zwischen der Tür 2 und der Stützfläche 12. In einer möglichen Lösung besteht der Halter 111 aus mindestens zwei halbzylindrischen Stege 111', 111", die bei der Schliessung der Tür 2 rotiert werden (Figuren 8a-b). Die Figur 8a zeigt, wie die Dünnschichtplatte D in der offenen Entwicklungskammer 1 auf der abgerundeten Seite der halbzylindrischen Stege 111', 111" gestellt wird, und die Figur 8b wie die halbzylindrischen Stege bei der Schliessung der Tür 2 weggedreht werden, so dass ihre flache Seite nicht mehr in Kontakt mit der Dünnschichtplatte 2 steht.

Zur Spülung des Innenraums 3, des Einlasses 14, des Auslasses 15 und/oder des Fliessmitteltrogs 11 ist es denkbar, eine Spülflüssigkeit entweder durch den Einlass 14 und den Auslass 15 oder durch separate, zusätzliche Öffnungen in der Entwicklungskammer 1 einzubringen und abzuführen. Zur Trocknung der Entwicklungskammer 1 nach einer Spülung können ebenfalls Gaseinlässe und Gasauslässe vorgesehen werden.

Zur laufenden Regenerierung des aus der Entwicklungskammer 1 austretenden Gasstroms wird dieser in einer Flasche, die mit dem Auslass 15 verbunden ist, in ein vorbereitetes Puffer-Lösungsmittelgemisch eingeblasen. Somit wird die Zusammensetzung des Gasstroms auf die gewünschte Zusammensetzung zurückgesetzt, bevor er wieder in die Entwicklungskammer 1 eingeführt wird. Zur Umwälzung der Gasphase und Erzeugung des Gasstroms kann z.B. eine Umwälzpumpe am Auslass 15 eingebaut werden.

Die erfindungsgemässe Vorrichtung wird vorteilhaft aus einem leicht zu fräsenden, mechanisch beständigen, korrosionsbeständigen, chemisch inerten und zur Benutzung in feuchter Umgebung und mit warmem Gas geeigneten Material gefertigt. Ausserdem muss die Oberfläche des Materials glatt sein, damit Rückstände leicht weggespült werden können. Vorteilhaft ist es ebenfalls, wenn das Material lichtundurchsichtig ist, damit die erfindungsgemässe Vorrichtung auch für den Umgang mit lichtempfindlichen Substanzen geeignet ist und photochemische Artefakte vermieden werden. Kunststoffe sind bevorzugt, beispielsweise PEEK (Polyetheretherketon) oder andere Kunststoffe der Stoffgruppe der Polyaryletherketone oder Teflon.

Versuche haben gezeigt, dass eine mit Druckluft aufblasbare Abdichtung 21 eine besonders gute Abdichtung des Innenraums 3 gewährleistet. Eine derartige Abdichtung weist ausserdem den Vorteil auf, dass die Abdichtung radial zwischen den Türrahmen und der entsprechenden Öffnung in der Entwicklungskammer 1 erfolgt, und die Tür 2 somit nicht axial mit grosser Kraft gegen die Entwicklungskammer 1 gedrückt werden muss.

Gemäss Ausführungsvariante der Figuren 1 , 2a-b , 3a-b und 7 ist die Tür 2 auf der Vorderseite der Entwicklungskammer 1 angeordnet und zwischen der offenen und der geschlossenen Position drehbar, in anderen möglichen Ausführungsvarianten kann sie jedoch auch auf anderen Seiten der Entwicklungskammer 1 angeordnet und/oder zwischen der offenen und der geschlossenen Position verschiebbar sein. In anderen Ausführungsvarianten könnte der Innenraum auch schräg oder sogar horizontal sein, wobei die Dünnschichtplatte D dann in den Innenraum 3 gelegt wird.

Mit dieser Offenbarung werden ein Verfahren und eine Vorrichtung zur automatischen Chromatographie von Dünnschichtplatten bereitgestellt, wobei vier wesentliche Massnahmen zusammen die chromatographische Entwicklung von Dünnschichtplatten D unter reproduzierbaren Bedingungen ermöglichen:
a) die gute Abdichtung der Entwicklungskammer 1 und vollständige Trennung der Dünnschichtplatte D von der Umgebung;
b) das beschränkte Volumen der Innenatmosphäre über der Trennschicht der Dünnschichtplatte D;
c) die automatische Steuerung der Zusammensetzung der Innenatmosphäre während der Vorkonditionierung und/oder der chromatographischen Entwicklung und Regelung der Steuerung durch die Überwachung der verschiedenen Vorgänge mit Sensoren. Mit diesen Sensoren kann der genaue Zeitpunkt, zu dem ein gewünschter, vordefinierter Zustand erreicht wird, automatisch ermittelt werden, und den nächsten Verfahrensschritt sogleich automatisch gestartet werden;
d) die Erneuerung der Innenatmosphäre und genaue Steuerung der Gasströmung über die Oberfläche der Dünnschichtplatte während der Vorkonditionierung und/oder der chromatographischen Entwicklung.

Dies gewährleistet eine grössere Genauigkeit und Einheitlichkeit der Zusammensetzung der Innenatmosphäre der Entwicklungskammer 1 während der Vorkonditionierung oder der chromatographischen Entwicklung und somit eine höhere Qualität und Reproduzierbarkeit der erzeugten Chromatogramme.

## Patentansprüche

1. Verfahren zur automatischen Chromatographie von Dünnschichtplatten für die Dünnschichtchromatographie mit einer Entwicklungskammer (1), in welcher eine Dünnschichtplatte (D) vollständig eingeschlossen und von der äusseren Umgebung isoliert und abgedichtet wird, wobei sich in der Entwicklungskammer 1 auf der Vorderseite der Trennschicht der Dünnschichtplatte (D) ein Vorderraum (31) befindet, welcher eine Innenatmosphäre enthält,
umfassend eine chromatographische Entwicklung
wobei während der chromatographischen Entwicklung oder während einer vorgängigen Vorkonditionierung, bei welcher die Innenatmosphäre mit einer bestimmten Gasphasenzusammensetzung gesättigt wird und die Trennschicht der Dünnschichtplatte (D) mit bestimmten Substanzen definiert beladen wird, zur Steuerung der sich in der Trennschicht der Dünnschichtplatte (D) abwickelnden Vorgänge durch den ganzen Vorderraum (31) hindurch ein Gasstrom mit bestimmter, durch den Benutzer festgelegter Zusammensetzung erzeugt wird und auf die Trennschicht der Dünnschichtplatte (D) einwirkt, wobei durch den Gasstrom die gesamte Innenatmosphäre in Bewegung gesetzt wird, ohne Ruhebereich oder stehende Gasphase.

2. Verfahren gemäss Anspruch 1,
wobei vor der chromatographischen Entwicklung oder vor der vorgängigen Vorkonditionierung eine Aktivierung durchgeführt wird, bei welcher die Feuchtigkeit der Trennschicht der Dünnschichtplatte eingestellt wird.

3. Verfahren gemäss Anspruch 1,
wobei der Gasstrom laminar ist, so dass er vor sich die Innenatmosphäre, die sich im Vorderraum (31) befindet, stets aus dem Vorderraum (31) heraustreibt, ohne Verwirbelungen und ohne sich damit zu vermischen, und die Innenatmosphäre mit dem Gasstrom vollständig erneuert wird.

4. Verfahren gemäss einem der vorgehenden Ansprüche,
wobei die Vorderseite der Dünnschichtplatte (D), auf welcher sich die Trennschicht befindet, von der Rückseite der Dünnschichtplatte (D) isoliert wird.

5. Verfahren gemäss einem der vorgehenden Ansprüche,
umfassend die folgende Schritte in der folgenden Reihenfolge:
a) Aktivierung: Einstellung der Feuchtigkeit der Trennschicht der Dünnschichtplatte (D);
b) Vorkonditionierung: Sättigung der Innenatmosphäre mit einer bestimmten Gasphasenzusammensetzung und definierten Beladung der Trennschicht der Dünnschichtplatte (D) mit bestimmten Substanzen;
c) Einführung des Fliessmittels;
d) chromatographische Entwicklung mit laufenden Regelung des Fliessmittelspiegels und mit Detektion des Fliessmittelfronts;
e) Entfernung des Fliessmittels;
f) Trocknung der Dünnschichtplatte (D).

6. Vorrichtung zur automatischen Chromatographie von Dünnschichtplatten für die Dünnschichtchromatographie mit einer Entwicklungskammer (1), in welcher eine Dünnschichtplatte (D) vollständig einschliessbar und von der äusseren Umgebung isolierbar und abdichtbar ist, wobei sich in der Entwicklungskammer (1) auf der Vorderseite der Trennschicht der Dünnschichtplatte (D) ein Vorderraum (31) befindet, und sich an einem unteren Ende des Vorderraums (31) ein Fliessmitteltrog (11) befindet, in welchem die in der Entwicklungskammer einschliessbare Dünnschichtplatte (D) während einer Vorkonditionierung und der chromatografischen Entwicklung steht und mit ihrem unteren Ende eintaucht,
wobei die Vorderseite der Dünnschichtplatte gegen eine erhöhte Stützfläche (12) der Rückwand (13) des Innenraums der Entwicklungskammer anlehnbar ist,
wobei
an einem Ende des Vorderraums (31) mindestens ein Einlass (14) und am anderen Ende des Vorderraums (31) mindestens ein Auslass (15) vorgesehen ist,
der Auslass (15) eine Auslass-Eintrittsöffnung (151) aufweist, die im Vorderraum (31) ausserhalb des Fliessmitteltrogs mündet, und
die Tiefe (d1) des Vorderraums (31), d.h. der Abstand zwischen der Vorderseite der Dünnschichtplatte (D) und der Rückwand (13), zwischen 1 und 3 mm beträgt.

7. Vorrichtung gemäss Anspruch 6, wobei der Einlass mindestens eine Einlass-Austrittsöffnung (143) umfasst, der Auslass mindestens eine Auslass-Eintrittsöffnung (151) umfasst, und die Einlass-Austrittsöffnungen (143) und die Auslass-Eintrittsöffnungen (151) auf der ganzen Breite der Rückwand (13) des Innenraums (3) der Entwicklungskammer (1) angeordnet sind.

8. Vorrichtung gemäss Anspruch 6, wobei die Rückwand (13) des Innenraums (3) der Entwicklungskammer (1) eine U-förmige erhöhte Stützfläche (12) aufweist, gegen welche die Vorderseite einer Dünnschichtplatte (D) anlehnbar ist, so dass der Vorderraum (31) von der Stützfläche (12) auf mindestens (3) Seiten umgeben ist.

9. Vorrichtung gemäss Anspruch 6, wobei der Einlass (14) einen Laminisierungsbereich (1421) aufweist, mit Kanälen (161), die desto kürzer sind, je weiter sie vom Eintritt des Laminisierungsbereichs (1421) entfernt sind.

10. Vorrichtung gemäss Anspruch 6, wobei der Einlass (14) einen Laminisierungsbereich (1421) aufweist, wobei der Laminisierungsbereich (1421) mit parallelen und in regelmässigem Abstand angeordneten Lamellen (16) versehen ist.

11. Vorrichtung gemäss Anspruch 6, wobei der Einlass (14) ein schräges Segment (1422) aufweist, wobei das schräge Segment (1422) auf den Vorderraum (31) mündet und mit einem Neigungswinkel von maximal 45° mit der Rückwand (13) des Innenraums (3) der Entwicklungskammer orientiert ist.

12. Vorrichtung gemäss Anspruch 6, wobei der Auslass (15) aus mindestens einer Auslass-Eintrittsöffnung (151), die in den Vorderraum (31) mündet, mindestens einem Auslass-Kanal (152) und mindestens einer Auslass-Austrittsöffnung (153) besteht, wobei jede Auslass-Eintrittsöffnung (151) mit einem eigenen Auslass-Kanal (152) zur Auslass-Austrittsöffnung (153) verbunden ist, jeder Auslass-Kanal (152) dieselbe Länge aufweist und gewisse Auslass-Kanäle (152) gebogen oder zickzackförmig sind.

13. Vorrichtung gemäss Anspruch 6, wobei die Entwicklungskammer eine Tür (2) aufweist, welche zwischen einer geschlossenen Position und einer offenen Position drehbar oder verschiebbar ist, und zur guten Abdichtung des Innenraums (3) der Entwicklungskammer die Tür (2) und/oder die Entwicklungskammer (1) mit einer aufblasbaren Abdichtung (21) versehen ist.

## Claims

1. Method for the automatic chromatography of thin-layer plates for thin-layer chromatography with a development chamber (1), in which a thin-layer plate (D) is completely enclosed and isolated and sealed from the external environment, a front space (31) being located within the development chamber (1) on the front side of the separating layer of the thin-layer plate (D), the front space (31) containing an inner atmosphere,
the method comprising a chromatographic development
wherein during chromatographic development or during prior preconditioning, in which the inner atmosphere is saturated with a specific gas phase composition and the separating layer of the thin-layer plate (D) is loaded with specific substances in a defined manner,
in order to control the processes taking place in the separating layer of the thin-layer plate (D), a stream of gas with a specific composition determined by the user is generated throughout the entire front space (31) and acts on the separating layer of the thin-layer plate (D), the stream of gas setting the entire inner atmosphere in motion, without resting area or stagnant gas phase.

2. Method according to claim 1,
wherein
before the chromatographic development or before the prior preconditioning, an activation is carried out, in which the moisture of the separating layer of the thin-layer plate is adjusted.

3. Method according to claim 1,
wherein
the stream of gas is laminar, so that it always drives the inner atmosphere located in the front space (31) out of the front space (31), without turbulence and without mixing with it, and the inner atmosphere is completely renewed by the stream of gas.

4. Method according to one of the preceding claims,
wherein
the front side of the thin-layer plate (D), on which the separating layer is located, is insulated from the back of the thin-layer plate (D).

5. Method according to one of the preceding claims,
comprising the following steps in the following order:
a) activation: adjustment of the moisture of the separating layer of the thin-layer plate (D);
b) preconditioning: saturation of the inner atmosphere with a specific gas phase composition and defined loading of the separating layer of the thin-layer plate (D) with certain substances;
c) introduction of the eluent;
d) chromatographic development with continuous control of the eluent level and with detection of the eluent front;
e) removal of the eluent;
f) drying of the thin-layer plate (D).

6. Device for automatic chromatography of thin-layer plates for thin-layer chromatography with a development chamber (1), in which a thin-layer plate (D) can be completely enclosed and isolated and sealed from the external environment, a front space (31) being located within the development chamber (1) on the front side of the separating layer of the thin-layer plate (D), a fluid trough (11) being located at the lower end of the front space (31), wherein the thin-layer plate (D) which can be enclosed in the development chamber stands in the fluid trough (11) during preconditioning and chromatographic development and its lower end is immersed therein,
wherein the front side of the thin-layer plate can be leaned against a raised support surface (12) of the rear wall (13) of the interior of the development chamber,
wherein
at least one inlet (14) is provided at one end of the front space (31) and at least one outlet (15) is provided at the other end of the front space (31),
the outlet (15) has an inlet opening (151) which opens into the front space (31) outside the fluid trough, and
the depth (d1) of the front space (31), i.e. the distance between the front side of the thin-layer plate (D) and the rear wall (13), is between 1 and 3 mm.

7. Device according to claim 6,
wherein
the inlet comprises at least one outlet opening (143),
the outlet comprises at least one inlet opening (151), and
the outlet openings (143) and the inlet openings (151) are arranged over the entire width of the rear wall (13) of the interior (3) of the development chamber (1).

8. Device according to claim 6,
wherein
the rear wall (13) of the interior (3) of the development chamber (1) has a U-shaped raised support surface (12), against which the front side of a thin-layer plate (D) can be leaned, so that the front space (31) is surrounded by the support surface (12) on at least 3 sides.

9. Device according to claim 6,
wherein
the inlet (14) has a laminating area (1421), with channels (161) which are shorter the further away they are from the entrance to the laminating area (1421).

10. Device according to claim 6,
wherein
the inlet (14) has a laminating area (1421),
wherein the laminating area (1421) is provided with parallel lamella (16) arranged at regular intervals.

11. Device according to claim 6,
wherein
the inlet (14) has an oblique segment (1422) opening into the front space (31) and oriented at an angle of inclination of a maximum of 45° with respect to the rear wall (13) of the interior (3) of the development chamber.

12. Device according to claim 6,
wherein
the outlet (15) consists of at least one inlet opening (151) which opens into the front space (31), at least one outlet channel (152) and at least one outlet opening (153), each outlet inlet opening (151) being connected by its own outlet channel (152) to the outlet opening (153), each outlet channel (152) having the same length and certain outlet channels (152) being curved or zigzag-shaped.

13. Device according to claim 6,
wherein
the development chamber has a door (2) which is rotatable or slidable between a closed position and an open position, and
for good sealing of the interior (3) of the development chamber, the door (2) and/or the development chamber (1) is provided with an inflatable seal (21).

## Revendications

1. Procédé de chromatographie automatique de plaques à couche mince pour chromatographie sur couche mince avec une chambre de développement (1), dans laquelle une plaque à couche mince (D) est complètement enfermée et isolée et scellée de l'environnement extérieur, un espace avant (31) se trouvant dans la chambre de développement (1) sur la face avant de la couche de séparation de la plaque à couche mince (D), ledit espace avant (31) contenant une atmosphère interne,
le procédé comprenant un développement chromatographique et où pendant le développement chromatographique ou lors d'un préconditionnement préalable, au cours duquel l'atmosphère interne est saturée d'une composition de phase gazeuse spécifique et la couche de séparation de la plaque à couche mince (D) est chargée de substances spécifiques d'une manière définie,
afin de contrôler les processus se déroulant dans la couche de séparation de la plaque à couche mince (D),
un flux de gaz ayant une composition spécifique déterminée par l'utilisateur est généré à travers tout l'espace avant (31) et agit sur la couche de séparation de la plaque à couche mince (D), le flux de gaz provoquant la mise en mouvement de toute l'atmosphère intérieure, sans zone de repos ni phase gazeuse stagnante.

2. Procédé selon la revendication 1,
dans lequel
avant le développement chromatographique ou avant le préconditionnement préalable, une activation est réalisée, au cours de laquelle l'humidité de la couche de séparation de la plaque à couche mince est ajustée.

3. Procédé selon la revendication 1,
dans lequel
le flux de gaz est laminaire, de sorte qu'il chasse l'atmosphère interne, qui se trouve dans l'espace avant (31), continuellement devant lui hors de l'espace avant (31), sans turbulence et sans se mélanger avec lui, et l'atmosphère interne est entièrement renouvelée avec le flux de gaz.

4. Procédé selon l'une des revendications précédentes,
dans lequel
la face avant de la plaque à couche mince (D), sur laquelle se trouve la couche de séparation, est isolée de l'arrière de la plaque à couche mince (D).

5. Procédé selon l'une des revendications précédentes,
comprenant les étapes suivantes dans l'ordre suivant :
a) activation : réglage de l'humidité de la couche de séparation de la plaque à couche mince (D) ;
b) préconditionnement : saturation de l'atmosphère interne avec une composition spécifique de phase gazeuse et chargement défini de la couche de séparation de la plaque à couche mince (D) avec certaines substances ;
c) introduction de l'éluant ;
d) développement chromatographique avec contrôle continu du niveau d'éluant et avec détection du front de l'éluant ;
e) élimination de l'éluant ;
f) séchage de la plaque à couche mince (D).

6. Dispositif de chromatographie automatique de plaques à couche mince pour chromatographie sur couche mince avec une chambre de développement (1), dans laquelle une plaque à couche mince (D) peut être complètement enfermée et isolée et scellée de l'environnement extérieur, un espace avant (31) se trouvant dans la chambre de développement (1) sur la face avant de la couche de séparation de la plaque à couche mince (D), un bac à éluant (11) se trouvant à une extrémité inférieure de l'espace avant (31), la plaque à couche mince (D) enfermable dans la chambre de développement (1) se tenant dans le bac à éluant (11) pendant le développement chromatographique et y plongeant avec son extrémité inférieure,
où la face avant de la plaque à couche mince peut être adossée contre une surface d'appui surélevée (12) de la paroi arrière (13) de l'intérieur de la chambre de développement,
où
au moins une entrée (14) est prévue à une extrémité de l'espace avant (31) et au moins une sortie (15) est prévue à l'autre extrémité de l'espace avant (31), la sortie (15) présente une ouverture d'entrée (151) qui débouche dans l'espace avant (31) à l'extérieur du bac à éluant, et
la profondeur (d1) de l'espace avant (31), c'est-à-dire la distance entre la face avant de la plaque à couche mince (D) et la paroi arrière (13), est comprise entre 1 et 3 mm.

7. Dispositif selon la revendication 6,
dans lequel
l'entrée comprend au moins une ouverture de sortie (143),
la sortie comprend au moins une ouverture d'entrée (151), et
les ouvertures de sortie (143) et les ouvertures d'entrée (151) sont disposées sur toute la largeur de la paroi arrière (13) de l'intérieur (3) de la chambre de développement (1).

8. Dispositif selon la revendication 6,
dans lequel
la paroi arrière (13) de l'intérieur (3) de la chambre de développement (1) présente une surface d'appui surélevée (12) en forme de U, contre laquelle la face avant d'une plaque à couche mince (D) peut être appuyée, de sorte que l'espace avant (31) est entouré par la surface d'appui (12) sur au moins 3 côtés.

9. Dispositif selon la revendication 6,
dans lequel
l'entrée (14) présente une zone de laminarisation (1421), avec des canaux (161) qui sont d'autant plus courts qu'ils sont éloignés de l'entrée de la zone de laminarisation (1421).

10. Dispositif selon la revendication 6,
dans lequel
l'entrée (14) présente une zone de laminarisation (1421) dotée de lamelles parallèles (16) disposées à intervalles réguliers.

11. Dispositif selon la revendication 6,
dans lequel
l'entrée (14) présente un segment oblique (1422) débouchant dans l'espace avant (31) et orienté selon un angle d'inclinaison d'un maximum de 45° avec la paroi arrière (13) de l'intérieur (3) de la chambre de développement.

12. Dispositif selon la revendication 6,
dans lequel
la sortie (15) est constituée d'au moins une ouverture d'entrée (151) qui débouche dans l'espace avant (31), d'au moins un canal de sortie (152) et d'au moins une ouverture de sortie (153), chaque ouverture d'entrée (151) étant reliée par son propre canal de sortie (152) à l'ouverture de sortie (153), chaque canal de sortie (152) ayant la même longueur et certains canaux de sortie (152) étant incurvés ou en forme de zigzag.

13. Dispositif selon la revendication 6,
dans lequel
la chambre de développement comporte une porte (2) qui peut tourner ou coulisser entre une position fermée et une position ouverte, et
pour une bonne étanchéité de l'intérieur (3) de la chambre de développement, la porte (2) et/ou la chambre de développement (1) est dotée d'un joint gonflable (21).
